# EUROPEAN PATENT APPLICATION

(11) **EP 4 847 794 A1**
(43) Date of publication of application: **02.12.2026**
(21) Application number: 25745135.1
(22) Date of filing: 22.01.2025
(51) Int. Cl.: F16D 13/52, F16F 1/32

(54) **FRICTION CLUTCH AND METHOD FOR ASSEMBLING SAME**

(30) Priority: 22.01.2024 JP 2024007561
(71) Applicant: NSK Ltd., Tokyo 141-8560 (JP)
(72) Inventor: KITA, Masahiro, Fujisawa-shi, Kanagawa 251-8501 (JP); YAMAMOTO, Akihiro, Fujisawa-shi, Kanagawa 251-8501 (JP); KANAI, Kensuke, Takasaki-shi, Gunma 370-3344 (JP); OTSUKA, Tomohiro, Takasaki-shi, Gunma 370-3344 (JP)
(74) Representative: Müller-Boré & Partner Patentanwälte PartG mbB
(86) International application number: PCT/JP2025/001825
(87) International publication number: WO 2025/159094

(57) **Abstract**

A friction clutch device 7 includes a spring seat ring 32 fitted onto a second member 102, a pressing plate 36 that faces a side surface on a first side in an axial direction of a friction plate located farthest to the first side in the axial direction among at least one first friction plate 45 and at least one second friction plate 46, and is fitted onto the second member 102 so as to be able to move toward and away from the friction plate located farthest to the first side in the axial direction, an elastic member 37 held between the spring seat ring 32 and the pressing plate 36 and elastically biasing the pressing plate 36 toward a second side in the axial direction, and a spacer 33 and a retaining ring 34 that are locked in a locking groove 15 of the second member 102 and prevent displacement of the spring seat ring 32 toward the first side in the axial direction.

## Description

### TECHNICAL FIELD

The present disclosure relates to a friction clutch device that switches between a connection mode in which a first member and a second member rotate integrally and a disconnection mode in which the first member and the second member rotate relative to each other, and an assembly method thereof.

### BACKGROUND ART

In rotating mechanical devices such as automobiles and machine tools, a transmission is provided between a power source such as an engine or an electric motor and a driven unit in order to efficiently utilize the output of the power source. When a gear-type stepped transmission is used as such a transmission, a clutch device is incorporated between the power source and the transmission, the clutch device switching between a locked state in which the output torque of the power source can be transmitted to the transmission and an unlocked state in which the output torque cannot be transmitted. As such clutch devices, a friction clutch that transmits power through friction between a pair of friction surfaces facing each other, and a dog clutch that transmits power through claws that mesh with each other, are used.

A friction clutch can switch between a connection mode in which torque can be transmitted and a disconnection mode in which torque cannot be transmitted, regardless of a phase difference or a difference in rotational speed between a pair of engaging members facing each other.

WO 2022/074958 describes a normally closed type friction clutch device. The conventional friction clutch device described in WO2022/074958 includes a friction engagement portion having at least one first friction plate and at least one second friction plate supported so as to be capable of relative displacement in the axial direction, a pressing plate supported so as to be able to move toward and away from the first friction plate or the second friction plate in the axial direction, a disc spring that elastically presses the first friction plate and the second friction plate against each other through the pressing plate, and a pressing device that presses the pressing plate in a direction to release the force pressing the first friction plate and the second friction plate against each other.

In the conventional friction clutch device, when the pressing device is not exerting pressing force, the friction clutch device is connected by the disc spring pressing the first friction plate and the second friction plate against each other through the pressing plate. In contrast, the friction clutch device is disconnected by the pressing device pressing the pressing plate against the elastic force of the disc spring in a direction to release the force pressing the first friction plate and the second friction plate against each other.

### CITATION LIST

### PATENT LITERATURE

Patent Literature 1: WO2022/074958

### SUMMARY OF INVENTION

### TECHNICAL PROBLEM

In a friction clutch device, in order to ensure an appropriate torque capacity, it is necessary to appropriately ensure pressing force between the first friction plate and the second friction plate.

In the conventional friction clutch device described in WO 2022/074958, a disc spring that presses the first friction plate and the second friction plate against each other is elastically held between a small diameter flange portion provided on a rotating member and a pressing plate supported so as to be capable of relative displacement in the axial direction with respect to the small diameter flange portion. The distance in the axial direction between the small diameter flange portion and the pressing plate varies due to manufacturing errors and assembly errors of the components constituting the friction clutch device.

For this reason, in order to set the pressing force of the disc spring to an appropriate magnitude, a disc spring having an appropriate free height is selected from a plurality of types of disc springs having different free heights in accordance with the distance in the axial direction between the small diameter flange portion and the pressing plate, and is elastically held between the small diameter flange portion and the pressing plate. That is, it is necessary to prepare a plurality of types of disc springs having different free heights, which may increase a manufacturing cost.

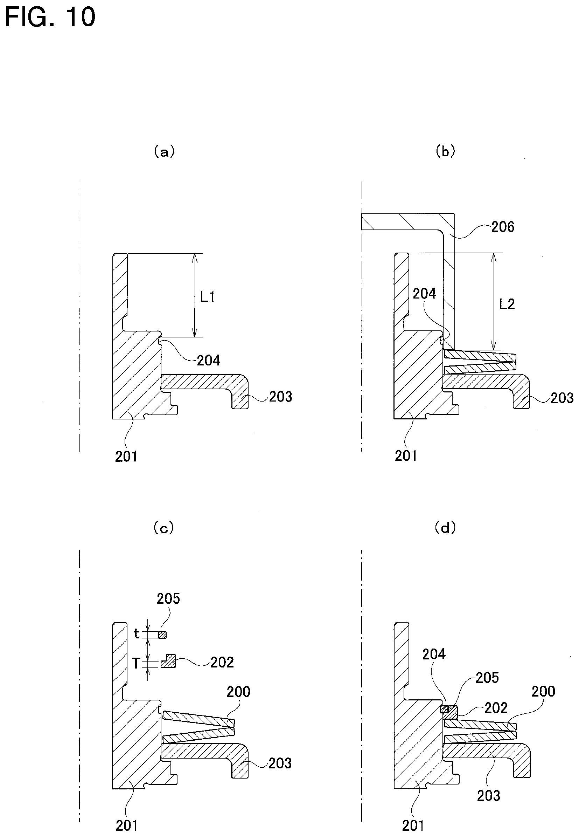

Therefore, as illustrated in FIG. 10(d), a structure is conceivable in which a disc spring 200 is elastically held between a spring seat ring 202 externally fitted onto a shaft member 201 and a pressing plate 203. The spring seat ring 202 is prevented from being displaced toward a first side in the axial direction (upper side in FIG. 10(d)), which is a direction away from the pressing plate 203, by a retaining ring 205 locked in a locking groove 204 provided on an outer circumferential surface of the shaft member 201.

In the structure illustrated in FIG. 10(d), the pressing force of the disc spring 200 can be adjusted by adjusting the thickness in the axial direction of the spring seat ring 202. This adjustment can be performed, for example, as follows.

First, as illustrated in FIG. 10(a), a first distance L1, which is the distance in the axial direction between an inside surface facing the second side in the axial direction of an inner surface of the locking groove 204 and an end surface on the first side in the axial direction of the shaft member 201, is measured.

Next, as illustrated in FIG. 10(b), the pressing plate 203 and the disc spring 200 are externally fitted onto the shaft member 201, and then the disc spring 200 is pressed from the first side in the axial direction with a load of a predetermined magnitude by a pressing jig 206. In this state, a second distance L2, which is the distance in the axial direction between the end surface on the first side in the axial direction of the shaft member 201 and an end portion on the first side in the axial direction of the disc spring 200, is determined. Then, ΔL (= L2 - L1), which is the difference between the second distance L2 and the first distance L1, is determined.

Next, as illustrated in FIG. 10(c), a thickness t in the axial direction of the retaining ring 205 is measured. Then, as the spring seat ring 202, a spring seat ring 202 is selected in which a thickness T of a portion of the spring seat ring 202 arranged adjacent to the second side in the axial direction of the retaining ring 205 has a magnitude (= ΔL - t) obtained by subtracting the thickness t of the retaining ring 205 from a difference ΔL between the second distance L2 and the first distance L1.

As illustrated in FIG. 10(c) and FIG. 10(d) in this order, the spring seat ring 202 is externally fitted onto the shaft member 201, and the retaining ring 205 is then locked with the locking groove 204, thereby preventing displacement of the spring seat ring 202 toward the first side in the axial direction.

The cost of preparing a plurality of types of spring seat rings 202 having different thicknesses in the axial direction can be kept lower than the cost of preparing a plurality of types of disc springs having different free heights.

However, in the case of the structure illustrated in FIG. 10(a) to FIG. 10(d), there is a problem in that it is difficult to measure the first distance L1, which is the distance in the axial direction between the inside surface facing the second side in the axial direction of the inner surface of the locking groove 204 having a small width in the axial direction and the end surface of the shaft member 201 on the first side in the axial direction. Further, for each device, it is necessary to measure three dimensions: the first distance L1, the second distance L2, and the thickness t in the axial direction of the retaining ring 205. For this reason, the number of work steps increases, which may increase the manufacturing cost.

An object of the present disclosure is to achieve a friction clutch device and an assembly method thereof that can appropriately adjust the pressing force of an elastic member while keeping the manufacturing cost low.

### SOLUTION TO PROBLEM

A friction clutch device according to an aspect of the present disclosure includes a first member; a second member; a spring seat ring; a spacer; a retaining ring; a friction engagement portion; a pressing plate; an elastic member; and a pressing device.

The second member has a locking groove on an outer circumferential surface thereof and is supported so as to be coaxial with the first member and capable of relative rotation with respect to the first member.

The spring seat ring is externally fitted onto the second member.

The spacer and the retaining ring are locked in the locking groove in order from a first side in an axial direction, and prevent displacement of the spring seat ring toward the first side in the axial direction.

The friction engagement portion has at least one first friction plate supported on an inner circumferential surface of the first member, and at least one second friction plate supported on an outer circumferential surface of the second member so as to be capable of relative displacement in the axial direction with respect to the at least one first friction plate.

The pressing plate faces a side surface on the first side in the axial direction of a friction plate located farthest to the first side in the axial direction among the at least one first friction plate and the at least one second friction plate, and is externally fitted onto the second member so as to be able to move toward and away from the friction plate located farthest to the first side in the axial direction.

The elastic member is held between the spring seat ring and the pressing plate, and elastically biases the pressing plate toward a second side in the axial direction.

The pressing device presses the pressing plate toward the first side in the axial direction.

The friction clutch device according to an aspect of the present disclosure switches to a connection mode in which the first member and the second member rotate integrally by pressing the first friction plate and the second friction plate against each other based on an elastic force of the elastic member when a force by which the pressing device presses the pressing plate toward the first side in the axial direction is released, and switches to a disconnection mode in which the first member and the second member rotate relative to each other by releasing the force pressing the first friction plate and the second friction plate against each other based on the elastic force of the elastic member when the pressing device presses the pressing plate toward the first side in the axial direction.

In the friction clutch device according to an aspect of the present disclosure, the spring seat ring has a base portion externally fitted onto the second member, and a skirt portion that protrudes from a radially outer portion of the base portion toward the first side in the axial direction and covers a periphery of the spacer and the retaining ring.

In the friction clutch device according to an aspect of the present disclosure, the elastic member includes a disc spring.

An assembly method of a friction clutch device according to an aspect of the present disclosure is an assembly method of a friction clutch device according to an aspect of the present disclosure, and includes a provisional assembly step; a measurement step; and a spacer installation step.

The provisional assembly step includes externally fitting the pressing plate, the elastic member, and the spring seat ring onto the second member in this order from the second side in the axial direction, and locks the retaining ring in the locking groove.

After the provisional assembly step, the measurement step includes applying a load of a predetermined magnitude directed to the second side in the axial direction to an end surface on the first side in the axial direction of the spring seat ring so as to displace the spring seat ring toward the second side in the axial direction, and measuring an amount of displacement of the spring seat ring toward the second side in the axial direction.

The spacer installation step includes locking the spacer having a same thickness as the amount of displacement in the locking groove from the first side in the axial direction.

### EFFECT OF INVENTION

With the friction clutch device and the assembly method thereof according to an aspect of the present disclosure, the pressing force of the elastic member can be appropriately adjusted while keeping the manufacturing cost low.

### BRIEF DESCRIPTION OF DRAWINGS

[FIG. 1] FIG. 1 is a schematic cross-sectional view of a powertrain incorporating a two-speed transmission including a friction clutch device of one example of an embodiment of the present disclosure.
[FIG. 2] FIG. 2(a) is a schematic cross-sectional view illustrating a torque transmission path in a low reduction ratio mode of the two-speed transmission, and FIG. 2(b) is a schematic cross-sectional view illustrating a torque transmission path in a high reduction ratio mode of the two-speed transmission.
[FIG. 3] FIG. 3 is a cross-sectional view of the two-speed transmission.
[FIG. 4] FIG. 4 is a cross-sectional view of the friction clutch device.
[FIG. 5] FIG. 5 is an exploded perspective view illustrating the first friction plate and the second friction plate that constitute the friction clutch device, taken out from the friction clutch device.
[FIG. 6] FIG. 6 is an enlarged view of a portion X of FIG. 4.
[FIG. 7] FIG. 7 is a perspective view illustrating a drive cam taken out from a pressing device that constitutes the friction clutch device.
[FIG. 8] FIG. 8 is an exploded perspective view illustrating a driven cam and rolling elements taken out from the pressing device that constitutes the friction clutch device.
[FIG. 9] FIG. 9(a) to FIG. 9(d) are partially enlarged cross-sectional views illustrating an assembly method of the friction clutch device in the order of steps.
[FIG. 10] FIG. 10(a) to FIG. 10(d) are partially enlarged cross-sectional views illustrating a previously devised assembly method of a friction clutch device in the order of steps.

### DESCRIPTION OF EMBODIMENTS

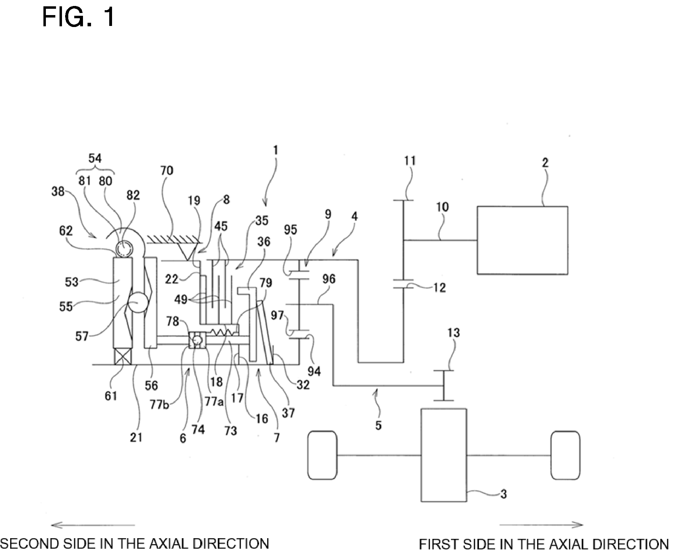

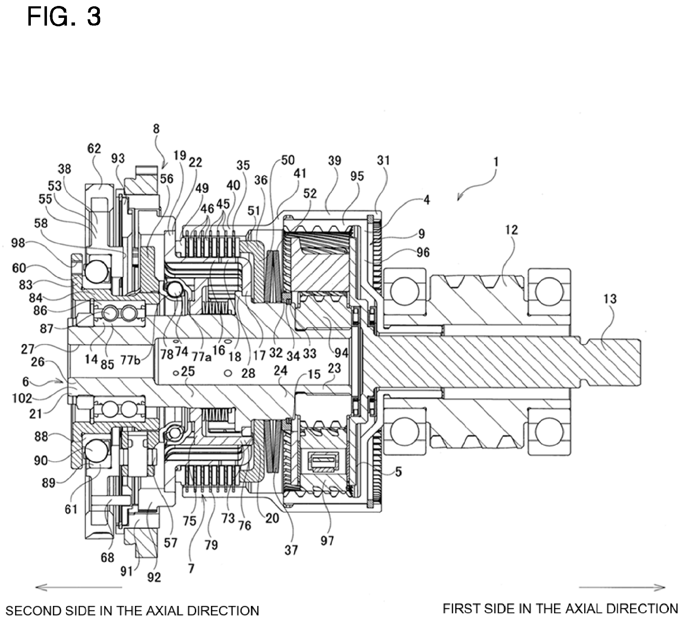

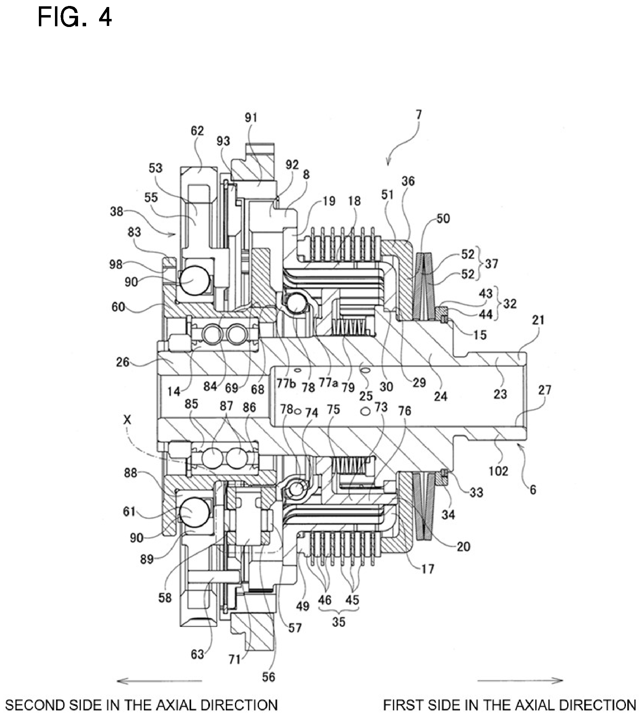

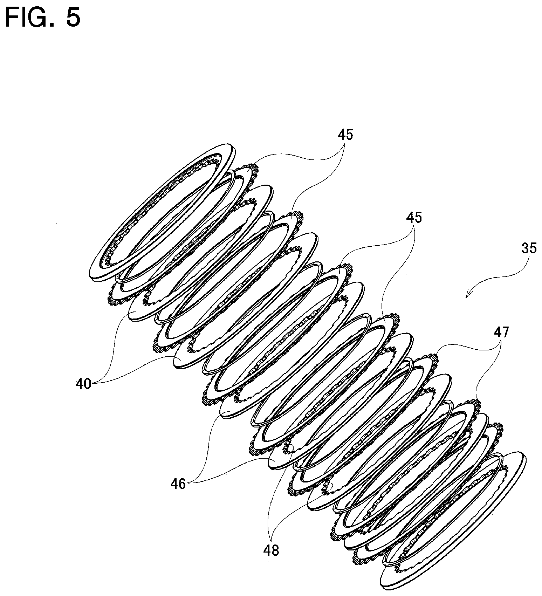

An example of an embodiment of the present disclosure will be described with reference to FIG. 1 to FIG. 9.

In the following, a friction clutch device according to an aspect of the present disclosure will be described based on an example in which the friction clutch device is incorporated into a two-speed transmission 1 for an automobile. The two-speed transmission 1 is arranged between a drive source 2 such as an electric motor or an engine and a differential device 3, and transmits the output torque of the drive source 2 to the differential device 3 while increasing (decelerating) the output torque or without increasing the output torque.

However, the friction clutch device according to an aspect of the present disclosure is not limited to be incorporated into a two-speed transmission for an automobile, and can be used by being incorporated into a portion between a pair of rotating members or a portion between a rotating member and a fixed member that constitute various mechanical devices.

The two-speed transmission 1 includes an input member 4; an output member 5; a rotating member 6; a friction clutch device 7; an engaging device 8; and a planetary reduction mechanism 9.

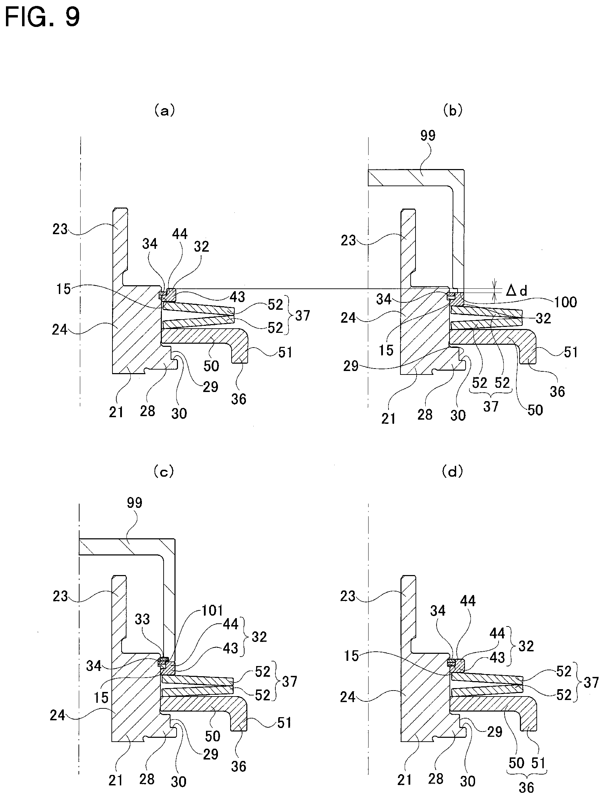

In the following description, the axial direction, the radial direction, and the circumferential direction refer to the axial direction, the radial direction, and the circumferential direction of the input member 4, unless otherwise specified. The axial direction, the radial direction, and the circumferential direction of the input member 4 coincide with the axial direction, the radial direction, and the circumferential direction of the output member 5, and also coincide with the axial direction, the radial direction, and the circumferential direction of the rotating member 6. Further, the first side in the axial direction refers to the right side in FIG. 1 to FIG. 4 and the upper side in FIG. 9(a) to FIG. 9(d), and the second side in the axial direction refers to the left side in FIG. 1 to FIG. 4 and the lower side in FIG. 9(a) to FIG. 9(d).

The input member 4 is composed of a housing or the like that houses the two-speed transmission 1, and is supported by rolling bearings or the like (not illustrated) with respect to a fixed portion 70 that does not rotate even during use so as to be able to rotate freely. In the present example, the input member 4 is configured to be cylindrical (hollow). Further, the input member 4 has an input gear 12 at an end portion on the first side in the axial direction thereof, the input gear 12 meshing with a drive gear 11 provided on an output shaft 10 of the drive source 2. That is, the input member 4 is configured to be rotationally driven by the drive source 2.

The output member 5 is supported so as to be coaxial with the input member 4 and capable of relative rotation with respect to the input member 4. In the present example, the output member 5 is supported on the inside in the radial direction of the cylindrical input member 4 so as to be capable of relative rotation with respect to the input member 4 through a ring gear 95, planetary gears 97, and a carrier 96 that constitute the planetary reduction mechanism 9. Further, the output member 5 has an output gear 13 at an end portion on the first side in the axial direction thereof. The output gear 13 meshes with a gear provided at an input portion of the differential device 3. That is, the output member 5 is connected to the input portion of the differential device 3 so as to be capable of transmitting torque.

The rotating member 6 is supported so as to be coaxial with the input member 4 and the output member 5 and capable of relative rotation with respect to the input member 4 and the output member 5. In the present example, the rotating member 6 is rotatably supported with respect to the fixed portion 70 through a ring gear 95, a planetary gear 97, and a sun gear 94 that constitute the planetary reduction mechanism 9, a pressing device 38 that constitutes the friction clutch device 7, and a bearing device 14 or the like.

The rotating member 6 has a locking groove 15 over the entire circumference on an outer circumferential surface of a middle portion in the axial direction thereof.

In the present example, the rotating member 6 has a flange portion 16 that protrudes toward the outside in the radial direction at a portion located further to the second side in the axial direction than the locking groove 15.

The flange portion 16 has a hollow circular plate-shaped inner diameter side annular portion 17; a cylindrical portion 18 that is bent toward the second side in the axial direction from an end portion on the outside in the radial direction of the inner diameter side annular portion 17; and a hollow circular plate-shaped outer diameter side annular portion 19 that is bent toward the outside in the radial direction from an end portion on the second side in the axial direction of the cylindrical portion 18.

The inner diameter side annular portion 17 has through holes 20 that penetrate in the axial direction at a plurality of locations in the circumferential direction of an intermediate portion in the radial direction thereof.

In the present example, the rotating member 6 is formed by connecting and fixing a shaft member 21 and a flange element 22.

The shaft member 21 has a stepped cylindrical shape. Specifically, the shaft member 21 has, in order from the first side in the axial direction, a first small diameter cylindrical portion 23; a large diameter cylindrical portion 24; a medium diameter cylindrical portion 25; and a second small diameter cylindrical portion 26. Further, the shaft member 21 has a through hole 27 for circulating lubricating oil, the through hole 27 penetrating a central portion of the shaft member 21 in the axial direction.

The locking groove 15 is formed over the entire circumference on an outer circumferential surface of a portion on the first side in the axial direction of the large diameter cylindrical portion 24.

Further, in the present example, the large diameter cylindrical portion 24 has, over the entire circumference, a protruding portion 28 at an end portion on the second side in the axial direction that protrudes further toward the outside in the radial direction than a portion adjacent thereto on the first side in the axial direction. The protruding portion 28 has a fitting surface portion 29 provided on an outer circumferential surface of a portion on the first side in the axial direction thereof, and a stepped surface 30 that is bent toward the outside in the radial direction from an end portion on the second side in the axial direction of the fitting surface portion 29 and faces the first side in the axial direction.

The flange element 22 has the inner diameter side annular portion 17; the cylindrical portion 18; and the outer diameter side annular portion 19.

The shaft member 21 and the flange element 22 are connected and fixed by welding or the like in a state where a portion on the inner side in the radial direction of a side surface on the second side in the axial direction of the inner diameter side annular portion 17 is brought into contact with the stepped surface 30, and an inner circumferential surface of the inner diameter side annular portion 17 is externally fitted onto the fitting surface portion 29.

The friction clutch device 7 is provided at a portion between the input member 4 and the rotating member 6, which are the pair of rotating members, and switches between a connection mode in which the input member 4 and the rotating member 6 rotate integrally and a disconnection mode in which the input member 4 and the rotating member 6 rotate relative to each other. When the friction clutch device 7 is incorporated into a portion between a rotating member and a fixed member, the friction clutch device 7 switches between a rotation mode that allows rotation of the rotating member and a braking mode that stops or decelerates rotation of the rotating member.

The friction clutch device 7 includes a first member 31; a second member 102; a spring seat ring 32; a spacer 33; a retaining ring 34; a friction engagement portion 35; a pressing plate 36; an elastic member 37; and the pressing device 38. The friction engagement portion 35 has at least one first friction plate 45 and at least one second friction plate 46 that are arranged so as to be capable of relative displacement in the axial direction with respect to each other.

The first member 31 is connected to one member of the pair of rotating members, or to one member of the rotating member and the fixed member, or is integrally formed with the one member. In the present example, the first member 31 is connected and fixed to the input member 4, which is the one member of the pair of rotating members, and rotates integrally with the input member 4.

The first member 31 can adopt any structure depending on the application and configuration of a device to which the friction clutch device 7 is applied, as long as the first friction plate 45 can be supported on the inner circumferential surface thereof. In the present example, the first member 31 has a stepped cylindrical shape. Specifically, the first member 31 is formed by connecting a large diameter cylindrical portion 39 on the first side in the axial direction and a small diameter cylindrical portion 40 on the second side in the axial direction with a connecting cylindrical portion 41 having a substantially triangular cross-sectional shape.

The first member 31 is connected and fixed so as to be able to rotate integrally with the input member 4 by externally fitting and fixing the large diameter cylindrical portion 39 onto the ring gear 95, which is provided integrally with the input member 4 so that there is no relative rotation.

The first member 31 has an uneven portion 42 on the first inner circumferential side on an inner circumferential surface of the small diameter cylindrical portion 40 thereof, the uneven portion 42 on the first inner circumferential side being formed by alternately arranging recessed portions and protruding portions in the circumferential direction.

The second member 102 is connected to the other member of the pair of rotating members, or to the other member of the rotating member and the fixed member, or is integrally formed with the other member. The second member 102 is supported so as to be coaxial with the first member 31 and capable of relative rotation with respect to the first member 31. The second member 102 can adopt any structure depending on the application and configuration of a device to which the friction clutch device 7 is applied, as long as the locking groove 15 can be provided on the outer circumferential surface thereof, the pressing plate 36 and the spring seat ring 32 can be externally fitted thereon, and the second friction plate 46 can be supported thereto.

In the present example, the second member 102 is constituted by the rotating member 6, which is the other member of the pair of rotating members and has the locking groove 15 and the flange portion 16 on an outer circumferential surface thereof.

The spring seat ring 32 is externally fitted onto the rotating member 6, which is the second member 102. Further, the spacer 33 and the retaining ring 34 are locked in the locking groove 15 provided on the rotating member 6 in order from the first side in the axial direction, and prevent displacement of the spring seat ring 32 toward the first side in the axial direction.

The spring seat ring 32 can adopt any structure depending on the configuration of the elastic member 37, as long as the spring seat ring 32 can support the first side in the axial direction of the elastic member 37 arranged between the spring seat ring 32 and the pressing plate 36. In the present example, the spring seat ring 32 has a substantially L-shaped cross-sectional shape. Specifically, the spring seat ring 32 includes a base portion 43 having a substantially rectangular cross-sectional shape, and a skirt portion 44 that protrudes over the entire circumference toward the first side in the axial direction from a radially outer portion of the base portion 43.

The base portion 43 is externally fitted onto a portion of an outer circumferential surface of the large diameter cylindrical portion 24 of the rotating member 6, the portion being located on the second side in the axial direction of the locking groove 15, without looseness in the radial direction and so as to enable relative displacement in the axial direction.

The skirt portion 44 covers the spacer 33 and the retaining ring 34 locked in the locking groove 15. In other words, by bringing the inner circumferential surface of the skirt portion 44 into contact with the outer circumferential surface of the spacer 33 and the outer circumferential surface of the retaining ring 34, the spacer 33 and/or the retaining ring 34 are prevented from inadvertently coming out of the locking groove 15.

The spacer 33 is locked in the locking groove 15, and has a function of restricting the spring seat ring 32 to a predetermined position in the axial direction and preventing displacement of the spring seat ring 32 toward the first side in the axial direction together with the retaining ring 34. In the present example, the spacer 33 has a substantially rectangular cross-sectional shape and a substantially C-shaped end surface shape when viewed from the axial direction. That is, the spacer 33 is formed in a partially ring-shaped shape having a discontinuous portion at one location in the circumferential direction. This facilitates installation of the spacer 33 into the locking groove 15. As long as the spacer 33 can be locked in the locking groove 15 and the function thereof is not impaired, a shape other than a rectangular shape can also be adopted for the cross-sectional shape thereof.

The spacer 33 has a portion on the inner side in the radial direction arranged at a portion on the first side in the radial direction inside the locking groove 15. Further, the spacer 33 brings a portion on the inner side in the radial direction of a side surface on the first side in the axial direction thereof into contact with an inside surface of an inner surface of the locking groove 15 facing the second side in the axial direction. This restricts displacement of the spacer 33 toward the first side in the axial direction.

The retaining ring 34 is locked in the locking groove 15, and has a function of preventing displacement of the spring seat ring 32 and the spacer 33 toward the first side in the axial direction. The retaining ring 34 is arranged adjacent to the second side in the axial direction of the spacer 33. The retaining ring 34 has a substantially rectangular cross-sectional shape and a substantially C-shaped end surface shape when viewed from the axial direction. That is, the retaining ring 34 is formed in a partially ring-shaped shape having a discontinuous portion at one location in the circumferential direction. This facilitates installation of the retaining ring 34 into the locking groove 15. As long as the retaining ring 34 can be locked in the locking groove 15 and the function thereof is not impaired, a shape other than a rectangular shape can also be adopted for the cross-sectional shape thereof.

The retaining ring 34 has a portion on the inner side in the radial direction arranged inside the locking groove 15. Further, the retaining ring 34 brings a radially outer portion of a side surface on the second side in the axial direction into contact with a side surface on the first side in the axial direction of the base portion 43, and brings a side surface on the first side in the axial direction thereof into contact with a side surface on the second side in the axial direction of the spacer 33. In other words, the retaining ring 34 is held in the axial direction between the side surface on the first side in the axial direction of the base portion 43 and the side surface on the second side in the axial direction of the spacer 33.

The friction engagement portion 35 has at least one first friction plate 45 and at least one second friction plate 46 that are supported so as to be capable of relative displacement in the axial direction. The at least one first friction plate 45 is supported on an inner circumferential surface of the first member 31. The at least one second friction plate 46 is supported on an outer circumferential surface of the second member 102 so as to be capable of relative displacement in the axial direction with respect to the at least one first friction plate 45.

For example, the friction engagement portion 35 can be configured to support the at least one first friction plate 45 on the inner circumferential surface of the first member 31 so that there is no displacement in the axial direction, and to support the at least one second friction plate 46 on the outer circumferential surface of the second member 102 so as to be capable of displacement in the axial direction. Alternatively, the friction engagement portion 35 can be configured to support the at least one first friction plate 45 on the inner circumferential surface of the first member 31 so as to be capable of displacement in the axial direction, and to support the at least one second friction plate 46 on the outer circumferential surface of the second member 102 so that there is no displacement in the axial direction.

Alternatively, the friction engagement portion 35 can be configured to support the at least one first friction plate 45 on the inner circumferential surface of the first member 31 so as to be capable of displacement in the axial direction, and to support the at least one second friction plate 46 on the outer circumferential surface of the second member 102 so as to be capable of displacement in the axial direction. However, even in this case, one friction plate of the at least one first friction plate 45 and the at least one second friction plate 46 can be supported so that there is no displacement in the axial direction with respect to the first member 31 or the second member 102.

In the present example, the friction engagement portion 35 is formed by alternately placing a plurality of first friction plates 45 and a plurality of second friction plates 46.

In the present example, the first friction plate 45 has a substantially hollow circular end surface shape when viewed from the axial direction. The first friction plate 45 has an uneven portion 47 on the first outer circumferential side on an outer circumferential surface thereof, the uneven portion 47 on the first outer circumferential side being formed by alternately arranging recessed portions and protruding portions in the circumferential direction. The first friction plate 45 is supported on the small diameter cylindrical portion 40 of the first member 31 so as to be capable of displacement in the axial direction and so that there is no relative rotation, by engaging the uneven portion 47 on the first outer circumferential side with the uneven portion 42 on the first inner circumferential side of the first member 31.

In the present example, the second friction plate 46 has a substantially hollow circular end surface shape when viewed from the axial direction. The second friction plate 46 has an uneven portion 48 on the second inner circumferential side on an inner circumferential surface thereof, the uneven portion 48 on the second inner circumferential side being formed by alternately arranging recessed portions and protruding portions in the circumferential direction. The second friction plate 46 is supported on the cylindrical portion 18 of the rotating member 6 so as to be capable of displacement in the axial direction and so that there is no relative rotation, by engaging the uneven portion 48 on the second inner circumferential side with an uneven portion on the second outer circumferential side provided on the outer circumferential surface of the cylindrical portion 18 of the rotating member 6, which is the second member 102.

The second friction plate 46 located farthest to the second side in the axial direction of the second friction plates 46 has a ridge portion 49 over an entire circumference, the ridge portion 49 protruding toward the second side in the axial direction from an intermediate portion in the radial direction of a side surface on the second side in the axial direction thereof, and displacement toward the second side in the axial direction is prevented by abutting a tip end portion of the ridge portion 49 against a side surface on the first side in the axial direction of the outer diameter side annular portion 19 of the rotating member 6.

The friction engagement portion 35 can include a return spring that elastically biases the first friction plate 45 and the second friction plate 46 in a direction so as to be separated from each other.

The pressing plate 36 faces a side surface on the first side in the axial direction of a friction plate located farthest to the first side in the axial direction among the at least one first friction plate 45 and the at least one second friction plate 46 (in the illustrated example, a second friction plate 46), and is externally fitted onto the rotating member 6, which is the second member 102, so as to be able to move in the axial direction toward and away from the friction plate located farthest to the first side in the axial direction.

The pressing plate 36 can adopt any structure depending on the configuration and arrangement of the friction engagement portion 35, the elastic member 37, and the pressing device 38, as long as the pressing plate 36 has, on the first side in the axial direction, a structure that supports a second side in the axial direction of the elastic member 37 arranged between the spring seat ring 32 and the pressing plate 36 and that is biased by the elastic member 37, and has, on the second side in the axial direction thereof, a structure that is pressed by the pressing device 38 toward the first side in the axial direction.

In the present example, the pressing plate 36 includes an annular portion 50 having a substantially hollow circular end surface shape when viewed from the axial direction, and a cylindrical portion 51 that is bent toward the second side in the axial direction from an end portion on the outside in the radial direction of the annular portion 50.

The annular portion 50 is externally fitted onto a middle portion in the axial direction of the large diameter cylindrical portion 24 of the rotating member 6 so as to be capable of relative displacement in the axial direction. An end portion on the inner side in the radial direction of a side surface on the second side in the axial direction of the annular portion 50 faces a side surface on the first side in the axial direction of the protruding portion 28. This prevents excessive displacement of the pressing plate 36 toward the second side in the axial direction.

The cylindrical portion 51 has an end surface on the second side in the axial direction thereof facing a side surface on the first side in the axial direction of the second friction plate 46 located farthest to the first side in the axial direction.

The elastic member 37 is held between the spring seat ring 32 and the pressing plate 36, and elastically biases the pressing plate 36 toward the second side in the axial direction. That is, the elastic member 37 presses the second friction plate 46 located farthest to the first side in the axial direction toward the second side in the axial direction by the pressing plate 36, and applies elastic force to the at least one first friction plate 45 and the at least one second friction plate 46 in a direction in which they are pressed against each other.

The elastic member 37 can be formed by one or a plurality of disc springs 52, one or a plurality of torsion coil springs, or the like. In the present example, a disc spring 52 is applied to the elastic member 37, and the elastic member 37 is formed by arranging two disc springs 52 in two stages in series. Specifically, the elastic member 37 is formed by abutting end portions on the large diameter side of the two disc springs 52 against each other with the orientations thereof in the axial direction reversed.

However, the elastic member 37 can also be formed by abutting end portions on the small diameter side of two disc springs 52 against each other with the orientations thereof in the axial direction reversed, or by arranging two disc springs 52 in a two-stage parallel stack. Alternatively, the elastic member 37 can be formed by one or three or more disc springs. When the elastic member is formed by three or more disc springs, each disc spring can be arranged in a series stack, a parallel stack, or a combination of a series stack and a parallel stack.

In the friction clutch device 7 of the present example, the elastic member 37 for applying elastic force in a direction in which the first friction plate 45 and the second friction plate 46 are pressed against each other is held between the pressing plate 36 and the spring seat ring 32 externally fitted onto the rotating member 6, and displacement of the spring seat ring 32 toward the first side in the axial direction is prevented by the spacer 33 and the retaining ring 34 locked in the locking groove 15 of the rotating member 6.

The assembly method of the friction clutch device 7, that is, the method for assembling the pressing plate 36, the elastic member 37, the spring seat ring 32, the retaining ring 34, and the spacer 33 onto the rotating member 6, which is the second member 102, will be described with reference to FIG. 9(a) to FIG. 9(d). The assembly method of the friction clutch device 7 includes a provisional assembly step; a measurement step; and a spacer installation step.

First, in the provisional assembly step illustrated in FIG. 9(a), the pressing plate 36, the elastic member 37, and the spring seat ring 32 are fitted onto the rotating member 6 (the second member 102), specifically the large diameter cylindrical portion 24 of the rotating member 6 in the present example, in this order from the second side in the axial direction, and the retaining ring 34 is locked in the locking groove 15.

Next, in the measurement step illustrated in FIG. 9(b), by applying a load F of a predetermined magnitude directed to the second side in the axial direction to an end surface on the first side in the axial direction of the spring seat ring 32, the spring seat ring 32 is displaced toward the second side in the axial direction, and an amount of displacement Δd of the spring seat ring 32 toward the second side in the axial direction is measured.

Specifically, by pressing an end surface on the first side in the axial direction of the skirt portion 44 of the spring seat ring 32 with a large diameter side pressing surface 100 provided on a tip end portion of a cylindrical pressing jig 99 with the load F of a predetermined magnitude, the spring seat ring 32 is displaced toward the second side in the axial direction against the elastic force of the elastic member 37. The amount of displacement Δd of the spring seat ring 32 is measured based on the stroke of the pressing jig 99.

The magnitude of the load F for pressing the spring seat ring 32 is appropriately determined according to the magnitude of the force with which the first friction plate 45 and the second friction plate 46 are to be pressed against each other based on the elastic force of the elastic member 37, in a state where the force for pressing the pressing plate 36 toward the first side in the axial direction by the pressing device 38 is released.

Next, in the spacer installation step illustrated in FIG. 9(c), the spacer 33 having the same thickness as the amount of displacement Δd is locked in the locking groove 15 from the first side in the axial direction. Specifically, of a plurality of types of spacers 33 having different thicknesses T in the axial direction, the spacer 33 having the same thickness T in the axial direction as the amount of displacement Δd of the spring seat ring 32 measured in the measurement step (T = Δd) is selected and locked in the locking groove 15 from the first side in the axial direction.

More specifically, the spacer 33 is elastically expanded in diameter and fitted onto an end portion of the large diameter cylindrical portion 24 located further to the first side in the axial direction than the locking groove 15. Then, a side surface on the first side in the axial direction of the spacer 33 is pressed toward the second side in the axial direction by the small diameter side pressing surface 101 provided on a tip end portion of the pressing jig 99. When the position in the axial direction of the spacer 33 coincides with that of the locking groove 15, the spacer 33 is elastically restored (is reduced in diameter), and as illustrated in FIG. 9(d), the spacer 33 is locked in the locking groove 15.

The cost of preparing a plurality of types of spacers 33 having different thicknesses T in the axial direction can be kept lower than the cost of preparing a plurality of types of disc springs having different free heights. Therefore, according to the friction clutch device 7 of the present example and the assembly method thereof, compared to the conventional friction clutch device described in WO2022/074958, it is easier to appropriately adjust the pressing force of the elastic member 37 while keeping the manufacturing cost low.

Further, in the assembly method of the friction clutch device 7 of the present example, there is no need to measure the distance in the axial direction between the surface facing the second side in the axial direction of the inner surface of the locking groove 15 having a small width in the axial direction and the end surface on the first side in the axial direction of the rotating member 6, which is the second member. For this reason, compared to the the previously devised assembly method illustrated in FIG. 10(a) to FIG. 10(d), the assembly work can be facilitated.

Furthermore, in the assembly method of the friction clutch device 7 of the present example, by merely measuring the amount of displacement Δd of the spring seat ring 32 toward the second side in the axial direction when the load F of a predetermined magnitude is applied, the spacer 33 having an appropriate thickness T in the axial direction can be selected. For this reason, the number of work steps required for assembling the friction clutch device 7 can be reduced. The manufacturing cost can also be reduced from this perspective.

The characteristics of the friction clutch device 7 of the present example and the assembly method thereof is that the thickness in the axial direction of the spacer 33 is adjusted so that the magnitude of the force with which the first friction plate 45 and the second friction plate 46 are to be pressed against each other based on the elastic force of the elastic member becomes a desired magnitude. Therefore, as long as the characteristics of the present example can be achieved, the cross-sectional shape and the thickness in the axial direction of the spacer 33, and the cross-sectional shape and the thickness in the axial direction of the retaining ring 34 are not particularly limited.

For example, the same member or different members can be used as the spacer 33 and the retaining ring 34. Specifically, the cross-sectional shape of the spacer 33 and the cross-sectional shape of the retaining ring 34 can be the same or different. Further, the thickness of the spacer 33 can be the same as or different from the thickness in the axial direction of the retaining ring 34. The spacer 33 can also be composed of a plurality of spacers 33.

The pressing device 38 presses the pressing plate 36 toward the first side in the axial direction. The pressing device 38 includes at least a pressing member 73 capable of pressing the pressing plate 36 and a mechanism for displacing the pressing member 73 in the axial direction.

In the present example, the pressing device 38 includes a cam device 53; an electric actuator 54; the pressing member 73; and a thrust bearing 74.

The cam device 53 includes a drive cam 55; a driven cam 56; and a plurality of rolling elements 57.

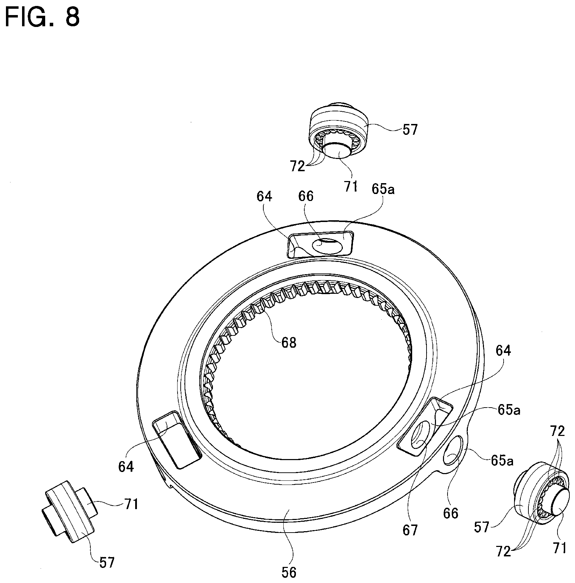

In the present example, as illustrated in FIG. 8, rollers are used as the rolling elements 57, and the rolling elements 57 are supported so as to be able to rotate (spin) freely about a rotation axis C oriented in a radial direction centered on a central axis of the driven cam 56, with respect to the driven cam 56. In FIG. 1 to FIG. 2, the cam device 53 is schematically illustrated to facilitate understanding of the invention.

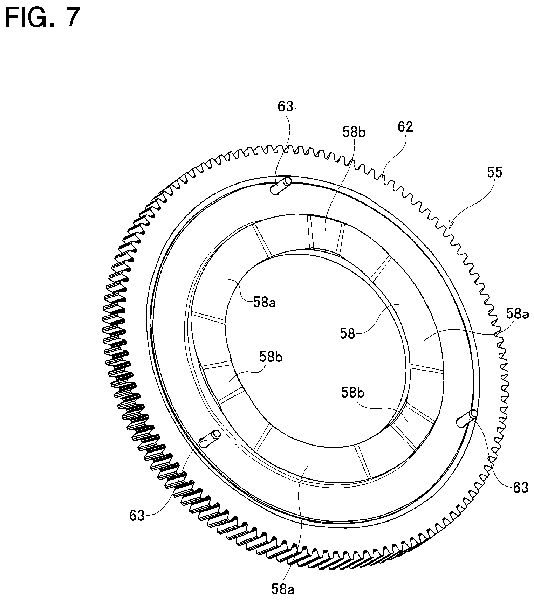

As illustrated in FIG. 7, the drive cam 55 has a drive cam surface 58 on a portion on the inner side in the radial direction of a side surface on the first side in the axial direction thereof, the drive cam surface 58 having the same number of recessed portions 58a and protruding portions 58b that are alternately arranged in the circumferential direction. The drive cam 55 is rotatably supported with respect to the rotating member 6 by a support member 60, the bearing device 14, and a radial bearing 61. In FIG. 1 to FIG. 2, the support member 60 and the bearing device 14 are omitted from illustration.

The support member 60 includes an annular portion 83 having a hollow circular end surface shape when viewed from the axial direction, and a cylindrical portion 84 that is bent toward the first side in the axial direction from an end portion on the inner side in the radial direction of the annular portion 83.

The support member 60 is supported and fixed to the fixed portion 70 by bolts (not illustrated) inserted or screwed into mounting holes 98 that are provided at a plurality of locations in the circumferential direction of the annular portion 83.

The bearing device 14 is composed of a double-row ball bearing, and includes an inner ring 85 fitted onto the second small diameter cylindrical portion 26 of the rotating member 6; an outer ring 86 fitted into the cylindrical portion 84 of the support member 60; and a plurality of rolling elements 87 arranged between the inner ring 85 and the outer ring 86 so as to be able to roll freely.

The radial bearing 61 is composed of an angular ball bearing, and includes an inner ring 88 fitted onto the cylindrical portion 84 of the support member 60; an outer ring 89 fitted into the drive cam 55; and a plurality of balls 90 arranged between the inner ring 88 and the outer ring 89 so as to be able to roll freely.

In the present example, the drive cam 55 has wheel teeth 62, which are helical gear teeth, on an outer circumferential surface thereof, and has pin portions 63 that protrude toward the first side in the axial direction at a plurality of locations in the circumferential direction (three locations in the illustrated example) of an intermediate portion in the radial direction of a side surface on the first side in the axial direction thereof. Tip end portions of the pin portions 63 are engaged with (loosely fitted into) engagement holes provided in a select plate 93 that constitutes the engaging device 8. As a result, the drive cam 55 and the select plate rotate integrally (in the same direction at the same speed).

As illustrated in FIG. 8, the driven cam 56 is formed in a hollow circular plate shape, and has rectangular holes 64 that penetrate in the axial direction at a plurality of locations in the circumferential direction (three locations in the illustrated example) of an intermediate portion in the radial direction thereof, and has substantially semicircular plate-shaped support plate portions 65a, 65b that protrude toward the second side in the axial direction from portions on both sides in the radial direction of each of the rectangular holes 64. Each of the support plate portions 65a on the outer side in the radial direction includes a support hole 66 which is a circular hole penetrating in the radial direction, and each of the support plate portions 65b on the inner side in the radial direction includes a support recessed portion 67 having a circular opening on an outer side surface in the radial direction. The driven cam 56 is arranged around the rotating member 6 so as to be capable of displacement only in the axial direction. Specifically, the driven cam 56 is supported so as to be capable of displacement with respect to the fixed portion 70 by spline-engaging a female spline portion 68 provided on an inner circumferential surface thereof with a male spline portion 69 provided on an outer circumferential surface of the cylindrical portion 84 of the support member 60 that is supported and fixed to the fixed portion 70.

Each of the plurality of rolling elements 57 has a cylindrical shape and is supported so as to be able to rotate freely with respect to the support plate portions 65a, 65b through a cylindrical support shaft 71 and a plurality of rollers 72. That is, an end portion on one side in an axial direction of the support shaft 71 (an end portion on the outer side in the radial direction centered on the central axis of the driven cam 56) is fitted and fixed in the support hole 66 of the support plate portion 65a on the outer side in the radial direction, and an end portion on the other side in the axial direction of the support shaft 71 (an end portion on the inner side in the radial direction centered on the central axis of the driven cam 56) is fitted and fixed in the support recessed portion 67 of the support plate portion 65b on the inner side in the radial direction. The plurality of rollers 72 are held between the inner circumferential surface of the rolling element 57 and the outer circumferential surface of the middle portion in the axial direction of the support shaft 71 so as to be able to roll freely. As a result, the rolling element 57 is supported by the driven cam 56 so as to be able to rotate (spin) freely about the rotation axis C oriented in the radial direction centered on the central axis of the driven cam 56.

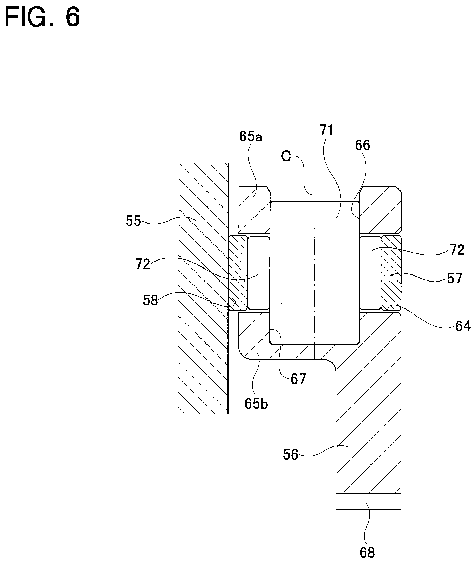

As illustrated in FIG. 6, in a state where the rolling elements 57 are supported by the driven cam 56, most of the rolling elements 57 are arranged in an inner side portion of the rectangular holes 64 and in portions between the support plate portions 65a, 65b. Further, an end portion on the second side in the axial direction of each of the outer circumferential surfaces of the rolling elements 57 is in rolling contact with the drive cam surface 58 provided on a side surface on the first side in the axial direction of the drive cam 55.

Alternatively, the rolling elements 57 configuring the cam device 53 can also be constituted by balls. In this case, in addition to the drive cam surface provided on the side surface on the first side in the axial direction of the drive cam, or instead of the drive cam surface, a driven cam surface is formed on a side surface on the second side in the axial direction of the driven cam, in which the same number of recessed portions and protruding portions are alternately arranged in the circumferential direction.

In the cam device 53, as the driving cam 55 rotates, the driven cam 56 displaces in the axial direction as an amount by which the rolling elements 57 ride up from a bottom portion of the recessed portions 58a configuring the driving cam surface 58 increases and decreases.

The driven cam 56 presses the pressing plate 36 toward the first side in the axial direction through the pressing member 73 and the thrust bearing 74.

The pressing member 73 has a base portion 75 and a plurality of pressing arm portions 76.

The base portion 75 has a substantially hollow circular end surface shape when viewed from the axial direction. The base portion 75 is fitted onto the medium diameter cylindrical portion 25 of the rotating member 6 without looseness in the radial direction so as to be capable of relative displacement in the axial direction.

Each of the pressing arm portions 76 protrudes toward the first side in the axial direction from an end portion on the outside in the radial direction of the base portion 75. Each of the pressing arm portions 76 is inserted into the through holes 20 provided in the inner diameter side annular portion 17, with a tip end surface thereof facing an intermediate portion in the radial direction of a side surface on the second side in the axial direction of the annular portion 50 of the pressing plate 36.

The thrust bearing 74 is constituted by arranging a plurality of rolling elements 78 so as to be able to roll freely between a pair of raceway rings 77a, 77b arranged so as to be separated in the axial direction and coaxial with each other. The thrust bearing 74 is arranged between a side surface on the first side in the axial direction of the driven cam 56 and a side surface on the second side in the axial direction of the base portion 75 of the pressing member 73.

In the friction clutch device 7 of the present example, since the pressing device 38 includes the thrust bearing 74, the pressing device 38 includes a preload applying member 79 for applying preload to the thrust bearing 74, regardless of the dimension in the axial direction of the cam device 53. The preload applying member 79 is composed of one or a plurality of disc springs, or one or a plurality of torsion coil springs. In the illustrated example, the preload applying member 79 is composed of a plurality of disc springs.

The preload applying member 79 is held in an elastically compressed state between a side surface on the first side in the axial direction of the base portion 75 of the pressing member 73 and an end surface on the second side in the axial direction of the large diameter cylindrical portion 24 of the rotating member 6. By tending to be elastically restored, the preload applying member 79 elastically presses the pressing member 73 toward the second side in the axial direction. As a result, preload is applied to the thrust bearing 74, and the thrust bearing 74 is prevented from falling out from between the driven cam 56 and the pressing member 73.

The electric actuator 54 rotationally drives the drive cam 55. In the present example, the electric actuator 54 includes an electric motor 80 and a speed reducer 81. The speed reducer 81 is constituted by meshing a worm 82, which is rotationally driven by the electric motor 80, with the wheel teeth 62 provided on an outer circumferential surface of the drive cam 55.

However, as a mechanism for rotationally driving the drive cam 55, instead of the combination of the electric actuator 54 and the speed reducer 81, it is also possible to adopt a structure in which a spur gear or bevel gear provided on the output shaft of the electric motor and a spur gear or bevel gear provided on the drive cam 55 are meshed with each other, or a belt or chain is passed between the output shaft of the electric motor and the drive cam 55.

Further, as the cam device 53, instead of the combination of the drive cam 55, the driven cam 56, and the rolling elements 57, it is also possible to use a cam device in which a drive cam surface provided on a drive cam and a driven cam surface provided on a driven cam are directly engaged (sliding) with each other, a cam device having a driven cam having a guide groove that extends in a circumferential direction on an outer circumferential surface thereof and changes in an axial direction thereof, and a drive cam having an engaging protruding portion that engages with the guide groove so as to be capable of displacement along the guide groove, or the like.

Alternatively, as the pressing device 38, instead of the combination of the cam device 53, the electric actuator 54, and the thrust bearing 74, a hydraulic cylinder device, a gas pressure cylinder device (including a pneumatic cylinder device), or the like can also be used as a mechanism for displacing the pressing member 73 in the axial direction, with the pressing member 73 constituted by a piston.

By controlling the pressing device 38, the friction clutch device 7 switches between the connection mode in which the first member 31 and the rotating member 6, which is the second member 102, rotate integrally and the disconnection mode in which the first member 31 and the rotating member 6 rotate relative to each other. That is, the friction clutch device 7 switches to the connection mode in which the first member 31 and the rotating member 6 (the second member 102) rotate integrally, by releasing the force with which the pressing plate 36 is pressed toward the first side in the axial direction with the pressing device 38, pressing the first friction plate 45 and the second friction plate 46 against each other based on the elastic force of the elastic member 37. The friction clutch device 7 switches to the disconnection mode in which the first member 31 and the rotating member 6 (the second member 102) rotate relative to each other, by pressing the pressing plate 36 toward the first side in the axial direction with the pressing device 38, releasing the force with which the first friction plate 45 and the second friction plate 46 are pressed against each other based on the elastic force of the elastic member 37.

In the present example, switching between the connection mode and the disconnection mode is performed by controlling energization of the electric motor 80 and adjusting the rotational phase of the drive cam 55.

More specifically, to switch the friction clutch device 7 to the connection mode, by energizing the electric motor 80 to rotationally drive the drive cam 55, the amount by which the rolling elements 57 ride up from a bottom portion of the recessed portions 58a of the drive cam surface 58 is decreased. As a result, the driven cam 56 releases the force with which the pressing plate 36 is pressed toward the first side in the axial direction through the pressing member 73 and the thrust bearing 74. When the force pressing the pressing plate 36 toward the first side in the axial direction is released, the pressing plate 36, the pressing member 73, and the thrust bearing 74 are pressed toward the second side in the axial direction by the elastic restoring force of the elastic member 37, and the second friction plate 46 located farthest to the first side in the axial direction is pressed toward the second side in the axial direction by the pressing plate 36. As a result, the first friction plate 45 and the second friction plate 46 are pressed against each other, the friction clutch device 7 is connected, and the first member 31 and the rotating member 6 start to rotate integrally.

To switch the friction clutch device 7 to the disconnection mode, by energizing the electric motor 80 to rotationally drive the drive cam 55, the amount by which the rolling elements 57 ride up from the bottom portion of the recessed portions 58a of the drive cam surface 58 is increased. Due to this, the pressing plate 36 is pressed toward the first side in the axial direction by the driven cam 56 through the pressing member 73 and the thrust bearing 74, a dimension in the axial direction of the elastic member 37 is elastically reduced, and the force with which the first friction plate 45 and the second friction plate 46 are pressed against each other is released. As a result, the distance between the first friction plate 45 and the second friction plate 46 increases, the friction clutch device 7 is disconnected, and the first member 31 and the rotating member 6 become capable of rotating relative to each other.

The engaging device 8 is provided between the fixed portion 70 and the rotating member 6, and switches between a state where the rotating member 6 is capable of rotating with respect to the fixed portion 70 and a state where the rotating member 6 is incapable of rotating. In the present example, the engaging device 8 is provided between an inner circumferential surface of the fixed portion 70 and the outer diameter side annular portion 19 of the rotating member 6.

The engaging device 8 can be constituted by, for example, a meshing type or friction type clutch (braking device) whose mode can be switched by an actuator. The actuator for switching between the disconnected and connected states of the clutch is not particularly limited, and a hydraulic actuator, an electromagnetic actuator, or the like can be used. In the present example, the engaging device 8 is configured to be capable of switching modes based on the rotation of the drive cam 55 constituting the pressing device 38.

The engaging device 8 includes an outer diameter side member 91 fitted and fixed into the fixed portion 70; an inner diameter side member 92 fitted and fixed onto the outer diameter side annular portion 19; at least one engaging pin (not illustrated); and the select plate 93.

The engaging pin is passed between the outer diameter side member 91 and the inner diameter side member 92 so as to be capable of engagement and disengagement. In the present example, the engaging pin is supported with respect to the outer diameter side member 91 in a state where the engaging pin protrudes from an inner circumferential surface of the outer diameter side member 91 toward the inner side in the radial direction and elasticity directed toward the inner side in the radial direction is applied thereto. Further, the inner diameter side member 92 has an engaging recessed portion on an outer circumferential surface thereof, with which a tip end portion of the engaging pin can engage.

The select plate 93 has engagement holes that open at a plurality of locations in the circumferential direction on a side surface on the second side in the axial direction thereof. A tip end portion of the pin portion 63 provided on the drive cam 55 is fitted into each of the engagement holes. As a result, the select plate 93 rotates integrally with the drive cam 55 (in the same direction at the same speed).

The select plate 93 has a mode select portion, which is an uneven portion in the circumferential direction.

Based on the rotation of the select plate 93, the engaging device 8 switches between a state where the outer diameter side member 91 and the inner diameter side member 92 are capable of rotating relative to each other and a state where the outer diameter side member 91 and the inner diameter side member 92 are incapable of rotating relative to each other. That is, based on the rotation of the select plate 93, the engaging pin is pushed up toward the outside in the radial direction by the protruding portion constituting the mode select portion, the engagement between the engaging pin and the engaging recessed portion is released, and the engaging device 8 is switched to the disconnection mode. As a result, rotation of the inner diameter side member 92 relative to the outer diameter side member 91 is allowed, and rotation of the rotating member 6 relative to the fixed portion 70 is allowed. On the other hand, based on the rotation of the select plate 93, by moving the protruding portion constituting the mode select portion to a position shifted in the circumferential direction from a tip end portion of the engaging pin, the engaging pin and the engaging recessed portion are engaged, and the engaging device 8 is switched to the connection mode. As a result, rotation of the inner diameter side member 92 relative to the outer diameter side member 91 is prevented, and rotation of the rotating member 6 relative to the fixed portion 70 is prevented.

The planetary reduction mechanism 9 includes a sun gear 94; a ring gear 95; a carrier 96; and a plurality of planetary gears 97. That is, in the present example, the planetary reduction mechanism 9 is constituted by a single pinion type planetary gear reducer.

However, when implementing the present disclosure, a double pinion type planetary gear mechanism can also be adopted as the planetary reduction mechanism. Alternatively, the planetary reduction mechanism can also be constituted by a friction roller mechanism having a sun roller; a ring roller arranged around the sun roller; and a planetary roller that is arranged between the sun roller and the ring roller in the radial direction and has a rolling surface, which is an outer circumferential surface thereof, friction-engaged with an outer circumferential surface of the sun roller and an inner circumferential surface of the ring roller.

The sun gear 94 is capable of rotating integrally with the rotating member 6. In the present example, the sun gear 94 is supported and fixed with respect to the rotating member 6 so as to be capable of rotating integrally, by spline-engaging a female spline portion provided on the inner circumferential surface thereof with a male spline portion provided on an outer circumferential surface of the first small diameter cylindrical portion 23 of the rotating member 6.

The ring gear 95 is arranged around the sun gear 94 so as to be coaxial with the sun gear 94, and is capable of rotating integrally with the input member 4. In the present example, the ring gear 95 is provided integrally on an inner circumferential surface of an end portion on the second side in the axial direction of the input member 4.

The carrier 96 is arranged between the sun gear 94 and the ring gear 95 in the radial direction so as to be coaxial with the sun gear 94 and the ring gear 95, and is capable of rotating integrally with the output member 5. In the present example, the carrier 96 is provided integrally with the output member 5 at an end portion on the second side in the axial direction of the output member 5.

Each of the plurality of planetary gears 97 meshes with the sun gear 94 and the ring gear 95, and is supported by the carrier 96 so as to be capable of rotation (spin) about its own central axis.

By switching the mode of the friction clutch device 7 and the mode of the engaging device 8 by controlling energization of the electric motor 80 and adjusting the rotational phase of the drive cam 55, the two-speed transmission 1 of the present example can switch between a low reduction ratio mode in which the reduction ratio between the input member 4 and the output member 5 is small (the reduction ratio is 1) and a high reduction ratio mode in which the reduction ratio is larger compared to the low reduction ratio mode.

### <Low Reduction Ratio Mode>

To switch the two-speed transmission 1 to the low reduction ratio mode, the friction clutch device 7 is switched to the connection mode and the engaging device 8 is switched to the disconnection mode.

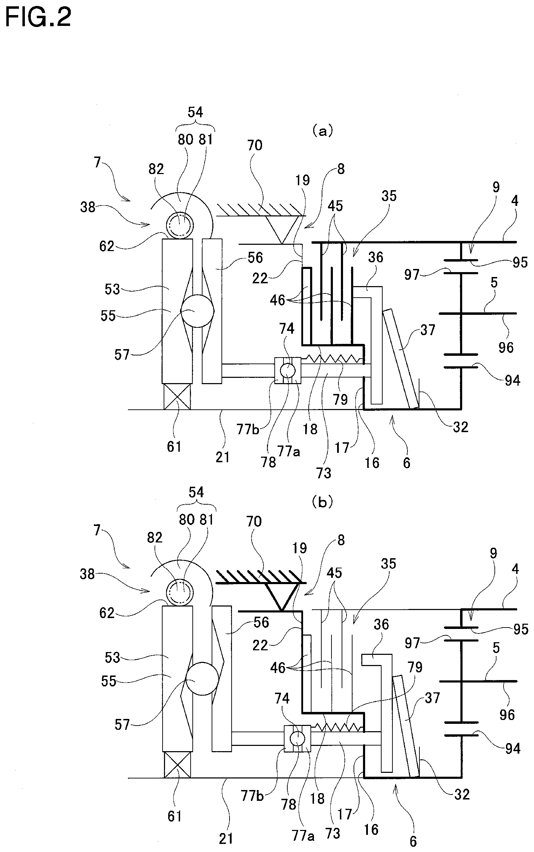

Specifically, as illustrated in FIG. 2(a), the drive cam 55 is rotationally driven based on energization of the electric motor 80 in a direction in which the amount by which the rolling elements 57 ride up from the bottom of the recessed portions 58a configuring the drive cam surface 58 decreases. As a result, the friction clutch device 7 is switched to the connection mode, and the input member 4, which is connected and fixed to the first member 31, and the rotating member 6, which is the second member, rotate integrally. As a result, the sun gear 94 and the ring gear 95 start to rotate integrally.

Further, as the drive cam 55 rotates, by adjusting the rotational phase of the select plate 93 to switch the engaging device 8 to the disconnection mode, relative rotation of the rotating member 6 with respect to the fixed portion 70 is allowed. As a result, rotation of the sun gear 94 with respect to the fixed portion 70 is allowed.

In such a low reduction ratio mode, the rotational direction and rotational speed of the sun gear 94, the ring gear 95, and the carrier 96 become the same, and the planetary reduction mechanism 9 as a whole rotates integrally, resulting in a so-called glued state. Therefore, the rotational torque of the input member 4 is transmitted as it is to the output member 5 through the path indicated by the thick lines in FIG. 2(a) without being increased (decelerated). In other words, in the low reduction ratio mode, the reduction ratio between the input member 4 and the output member 5 is 1.

### <High Reduction Ratio Mode>

To switch the two-speed transmission 1 to the high reduction ratio mode, the friction clutch device 7 is switched to the disconnection mode and the engaging device 8 is switched to the connection mode.

Specifically, as illustrated in FIG. 2(b), the drive cam 55 is rotationally driven based on energization of the electric motor 80 in a direction in which the amount by which the rolling elements 57 ride up from the bottom of the recessed portions 58a configuring the drive cam surface 58 increases. As a result, the friction clutch device 7 is switched to the disconnection mode, and the input member 4, which is connected and fixed to the first member 31, and the rotating member 6, which is the second member, become capable of rotating relative to each other. As a result, the sun gear 94 and the ring gear 95 become capable of rotating relative to each other.

Further, as the drive cam 55 rotates, by adjusting the rotational phase of the select plate 93 to switch the engaging device 8 to the connection mode, relative rotation of the rotating member 6 with respect to the fixed portion 70 is prevented. As a result, rotation of the sun gear 94 with respect to the fixed portion 70 is prevented.

In such a high reduction ratio mode, the rotational torque of the input member 4 is transmitted to the output member 5 through the path indicated by the thick lines in FIG. 2(b), that is, a path through the input member 4, the ring gear 95, the spinning motion of the planetary gears 97, the orbital motion of the planetary gears 97 based on meshing with the sun gear 94, and the carrier 96.

In the high reduction ratio mode, the rotational torque of the input member 4 is increased by the planetary reduction mechanism 9 and transmitted to the output member 5. The reduction ratio between the input member 4 and the output member 5 in the high reduction ratio mode is determined by the gear ratio of the ring gear 95 and the sun gear 94 (number of teeth of the ring gear 95 / number of teeth of the sun gear 94).

The two-speed transmission 1 can change the reduction ratio between the input member 4 and the output member 5 between two stages of high and low, by switching the mode of the friction clutch device 7 and the mode of the engaging device 8. Specifically, in a region where the rotational torque input to the input member 4 is low speed and high torque, the two-speed transmission 1 is switched to the high reduction ratio mode, and in a region where the rotational torque input to the input member 4 is high speed and low torque, the two-speed transmission 1 is switched to the low reduction ratio mode. For this reason, the acceleration performance and high-speed performance of an electric vehicle or hybrid vehicle traveling with only an electric motor as the drive source can be made comparable to those of a gasoline engine vehicle.

When changing the mode of the two-speed transmission 1, it is not necessary to perform the mode switching of the friction clutch device 7 and the mode switching of the engaging device 8 completely simultaneously, and these switchings can be slightly offset in time. That is, the engagement force and timing of the friction clutch device 7 and the engaging device 8 can be appropriately adjusted to reduce shift shock associated with the mode switching of the two-speed transmission 1.

The content of the present disclosure has been described above based on an example of a specific embodiment. However, it is apparent that a person skilled in the art can also implement equivalents within the scope of the present disclosure and various modifications and improvements included in the scope of the present disclosure by reference to the present disclosure, and these range is also included in the scope of the present disclosure.

### REFERENCE SIGNS LIST

1 Two-speed transmission
2 Drive source
3 Differential device
4 Input member
5 Output member
6 Rotating member
7 Friction clutch device
8 Engaging device
9 Planetary reduction mechanism
10 Output shaft
11 Drive gear
12 Input gear
13 Output gear
14 Bearing device
15 Locking groove
16 Flange portion
17 Inner diameter side annular portion
18 Cylindrical portion
19 Outer diameter side annular portion
20 Through hole
21 Shaft member
22 Flange element
23 First small diameter cylindrical portion
24 Large diameter cylindrical portion
25 Medium diameter cylindrical portion
26 Second small diameter cylindrical portion
27 Through hole
28 Protruding portion
29 Fitting surface portion
30 Stepped surface
31 First member
32 Spring seat ring
33 Spacer
34 Retaining ring
35 Friction engagement portion
36 Pressing plate
37 Elastic member
38 Pressing device
39 Large diameter cylindrical portion
40 Small diameter cylindrical portion
41 Connecting cylindrical portion
42 Uneven portion on the first inner circumferential side
43 Base portion
44 Skirt portion
45 First friction plate
46 Second friction plate
47 Uneven portion on the first outer circumferential side
48 Uneven portion on the second inner circumferential side
49 Ridge portion
50 Annular portion
51 Cylindrical portion
52 Disc spring
53 Cam device
54 Electric actuator
55 Drive cam
56 Driven cam
57 Rolling elements
58 Drive cam surface
   58a Recessed portion
   58b Protruding portion
60 Support member
61 Radial bearing
62 Wheel teeth
63 Pin portion
64 Rectangular hole
65a, 65b Support plate portions
66 Support hole
67 Support recessed portion
68 Female spline portion
69 Male spline portion
70 Fixed portion
71 Support shaft
72 Roller
73 Pressing member
74 Thrust bearing
75 Base portion
76 Pressing arm portion
77a, 77b Raceway rings
78 Rolling elements
79 Preload applying member
80 Electric motor
81 Speed reducer
82 Worm
83 Annular portion
84 Cylindrical portion
85 Inner ring
86 Outer ring
87 Rolling elements
88 Inner ring
89 Outer ring
90 Balls
91 Outer diameter side member
92 Inner diameter side member
93 Select plate
94 Sun gear
95 Ring gear
96 Carrier
97 Planetary gear
98 Mounting hole
99 Pressing jig
100 Large diameter side pressing surface
101 Small diameter side pressing surface
102 Second member
200 Disc spring
201 Shaft member
202 Spring seat ring
203 Pressing plate
204 Locking groove
205 Retaining ring
206 Pressing jig

## Claims

1. A friction clutch device including:
a first member;
a second member having a locking groove on an outer circumferential surface thereof and supported so as to be coaxial with the first member and so as to be capable of relative rotation with respect to the first member;
a spring seat ring fitted onto the second member;
a spacer and a retaining ring locked in the locking groove in order from a first side in an axial direction and preventing displacement of the spring seat ring toward the first side in the axial direction;
a friction engagement portion having at least one first friction plate supported on an inner circumferential surface of the first member, and at least one second friction plate supported on the outer circumferential surface of the second member so as to be capable of relative displacement in the axial direction with respect to the at least one first friction plate;
a pressing plate facing a side surface on the first side in the axial direction of a friction plate located farthest to the first side in the axial direction among the at least one first friction plate and the at least one second friction plate, and fitted onto the second member so as to be able to move toward and away from the friction plate located farthest to the first side in the axial direction;
an elastic member held between the spring seat ring and the pressing plate and elastically biasing the pressing plate toward a second side in the axial direction; and
a pressing device pressing the pressing plate toward the first side in the axial direction.

2. The friction clutch device according to claim 1, wherein the spring seat ring has a base portion fitted onto the second member, and a skirt portion that protrudes from a radially outer portion of the base portion toward the first side in the axial direction and covers a periphery of the spacer and the retaining ring.

3. The friction clutch device according to claim 1 or 2, wherein the elastic member has a disc spring.

4. An assembly method of the friction clutch device according to any of claims 1 to 3, the method including:
a provisional assembly step of fitting the pressing plate, the elastic member, and the spring seat ring onto the second member in this order from the second side in the axial direction, and locking the retaining ring in the locking groove;
a measurement step of, after the provisional assembly step, applying a load of a predetermined magnitude directed to the second side in the axial direction to an end surface on the first side in the axial direction of the spring seat ring so as to displace the spring seat ring toward the second side in the axial direction, and measuring an amount of displacement of the spring seat ring toward the second side in the axial direction; and
a spacer installation step of locking the spacer having a same thickness as the amount of displacement in the locking groove from the first side in the axial direction.
